## Europäisches Patentamt

## European Patent Office

## Office européen des brevets

(19)

(11) Publication number: **0 009 524**
**B1**

(12) # EUROPEAN PATENT SPECIFICATION

(45) Date of publication of patent specification: **16.03.83**

(51) Int. Cl.³: **C 01 B 3/36**

(21) Application number: **78300461.7**

(22) Date of filing: **05.10.78**

(54) Process for the production of gas mixtures containing CO and H2 by the partial oxidation of hydrocarbonaceous fuel with generation of power by expansion in a turbine.

(43) Date of publication of application:
**16.04.80 Bulletin 80/8**

(45) Publication of the grant of the patent:
**16.03.83 Bulletin 83/11**

(84) Designated Contracting States:
**BE DE FR GB NL SE**

(56) References cited:
**DE - A - 1 667 715**
**DE - A - 2 030 462**
**DE - A - 2 512 316**
**GB - A - 1 280 183**
**US - A - 2 660 521**
**US - A - 3 729 547**
**US - A - 3 868 817**
**US - A - 4 074 981**

(73) Proprietor: **TEXACO DEVELOPMENT CORPORATION**
**135 East 42nd Street**
**New York New York 10017 (US)**

(72) Inventor: **Barber, Everett McMullin**
**RD.1, Box 340**
**Wappingers Falls New York (US)**
Inventor: **Muenger, James Robert**
**26 North Avenue**
**Beacon New York 12508 (US)**
Inventor: **Alexander, David Lee**
**Sunset Hill Road**
**Fishkill New York 12524 (US)**
Inventor: **Schlinger, Warren Gleason**
**3835 Shadow Grove**
**Pasadena California 91109 (US)**

(74) Representative: **Brock, Peter William et al,**
**Michael Burnside & Partners 2 Serjeants' Inn Fleet Street**
**London EC4Y 1HL (GB)**

Courier Press, Leamington Spa, England.

## Process for the production of gas mixtures containing CO and H₂ by the partial oxidation of hydrocarbonaceous fuel with generation of power by expansion in a turbine.

This invention relates to a partial oxidation process for making gaseous mixtures comprising $H_2$ and CO in a gas generator and simultaneously generating power by direct expansion of all of the moderated effluent gas stream from the gas generator in a turbine.

The temperature of the effluent gas stream from a partial oxidation gas generator is normally reduced to a temperature in the range of 176 to 315°C (350 to 600°F) by quenching in a pool of water, or by cooling by indirect heat exchange with water. Both of these methods of gas cooling result in large increases in entropy and reduced thermal efficiency. Some energy may be recovered, when indirect heat exchange is employed, by passing the heated heat exchange fluid, through an expansion turbine (see GB—A—1569079 and 1590706). US—A—3,868,817 discloses the generation of power by burning purified fuel gas in the combustor of a gas turbine. According to US—A—2,660,521, carbon dioxide or steam may be introduced into the combustor of a turbine or into the efflux from the combustor. Such additions may change the composition of the product gas and increase the cost of purifying the process gas stream.

US—A—4074981 discloses a process in which cleaned and cooled synthesis gas mixtures comprising $H_2$ and CO are expanded through a turbine. According to US—A—4074981, the gaseous mixtures are produced by partial oxidation of a hydrocarbonaceous fuel at a temperature of 815 to 1927°C (1500 to 3500°F) and a pressure of 1 to 253 bars (1 to 250 atmospheres). The resulting gas stream is quenched with water giving an aqueous dispersion of particulate carbon and a quenched gas stream whose temperature has been reduced to 149 to 315°C (300 to 600°F). The quenched gas stream is further cooled by indirect heat exchange, and scrubbed with water. The resulting cooled and purified gas has a low temperature, e.g. about 38°C (100°F), but a relatively high pressure, and may be expanded through an expansion turbine.

In accordance with the present invention, the problems of increase in entropy and reduced thermal efficiency, as well as those of changed composition of the process gas, are avoided by cooling the raw process gas by mixing it with liquid water or recycled purified gas, and producing additional cooling by passing the resulting mixture through an expansion turbine.

According to the process of the present invention, the effluent gas stream from a free-flow partial oxidation gas generator at a temperature in the range of 980 to 1650°C (1800 to 3000°F) and a pressure in the range of 9.8 to 196 bars (10 to 200 atmospheres) and comprising $H_2$, CO, $CO_2$, $H_2O$ and generally at least one member of the group $H_2S$, COS, $CH_4$,

$N_2$, Ar, and entrained particulate solids, may be passed through a solids separation zone and then cooled by mixing with a recycle portion of a turbine exhaust stream. Subsequently said gas stream is, cleaned, optionally water-gas shifted or purified or both, and recompressed. Alternatively, the recycle gas stream may be cooled by mixing with liquid water, steam, or both. In one embodiment the temperature moderating stream comprises condensate produced in the process. The remaining portion of the process gas stream, which is not recycled, is removed for use as synthesis gas or fuel gas and constitutes the product of the process. The volume ratio of said recycle gas stream to turbine feed gas mixture may be in the range of about 0.2 to 0.8. The amounts and temperatures of the recycle process gas stream, steam, water, and the effluent generator gas stream which may be mixed together are such that the temperature of the resulting turbine feed gas mixture is a value in the range of 537 to 1315°C (1000 to 2400°F) e.g. 760 to 1205°C (1400 to 2200°F) most conveniently 760 to 1040°C (1400 to 1900°F). By operating the turbine at higher inlet temperatures, greater power-recovery may be achieved. Further, the acid-gas concentration of the gases passing through the turbine may be reduced by removing acid gases from the turbine exhaust before it is recycled. The cost of compressing the process gas stream with auxiliary compressors driven by said expansion turbine is considerably less than that of buying electric power from a public utility.

This invention provides an improved continuous partial oxidation gasification process for producing synthesis gas or fuel gas along with the production of mechanical power, and optionally electrical energy. The raw gas stream from the gas generator comprises $H_2$, CO, $CO_2$, $H_2O$ and particulate carbon, and will generally contain at least one member of the group $H_2S$, COS, $CH_4$, $N_2$, and Ar.

The process of the invention provides for the use of the heat content of the partial oxidation gases in the production of power without the requirement of extracting this heat in a high temperature heat exchanger or boiler. Such heat exchange equipment would be expensive, requiring either the rather high generator pressure or the rather high working fluid pressure to be on the shell side. The high generator temperature combines with the high hydrogen content of the generator product gases to present certain metallurgical problems in such heat exchangers. In these respects, at least, a heat exchanger to extract the high temperature heat from the generator efflux for use in a power cycle would differ significantly from usual furnace-mounted boilers and superheaters.

A molal increase is associated with the partial oxidation of any hydrocarbonaceous fuel. In the process of the present invention, power is obtained from this molal increase, in addition to the power obtained from the elevated pressure and sensible heat in the hot raw partial oxidation product gas.

By means of the present invention, it is possible to extract far more power from the inherent energy of the high-temperature highpressure generator efflux by direct expansion than by using heat transfer to a closed Brayton-cycle power plant, even when account is taken of the consumption of power in recompression of the product gas. Some of the reasons for this concern reduction or elimination of thermodynamic losses. A large factor, however, is the lower energy content of the process gas stream leaving the power section in the process of the present invention employing direct expansion.

The invention will be further understood by reference to the accompanying Drawing which is a schematic representation of a preferred embodiment of the process. All of the lines and equipment are preferably insulated to minimize heat loss.

Referring to the Drawing, free-flow noncatalytic partial oxidation gas generator 1 lined with refractory 2 has an upstream axially aligned flanged inlet port 3, a downstream axially aligned flanged outlet port 4, and an unpacked reaction zone 5. Annulus type burner 6, with centre passage 7 in alignment with the axis of gas generator 1, is mounted in inlet port 3. Centre passage 7 has a flanged upstream inlet 8, and a converging conical shaped downstream nozzle 9 at the tip of the burner.

Burner 6 is also provided with a concentric coaxial annular passage that has an upstream flanged inlet 10 and a downstream conical shaped discharge passage 11. Burners of other design may also be used.

A continuous stream of free-oxygen containing gas from line 20 is compressed in compressor 56, and passed through line 22 into flanged inlet 8 of burner 6. A hydrocarbonaceous fuel is introduced into burner 6 by way of line 23 and inlet 10. Optionally, the hydrocarbonaceous fuel may be pre-heated in recuperator 24 and fed to the burner 6 by way of lines 25 and 26. Optionally, steam in line 27 may be used to atomize the hydrocarbonaceous fuel.

Refractory lined or insulated flanged "T" connector 30 may be somewhat spherically shaped and is joined by inlet 31 to outlet 4 of gas generator 1. Axially aligned outlet 32 is connected to inlet 33 of insulated slag pot 34. Flanged axial outlet 35 is normally maintained closed by valve 40.

The effluent gas stream from gas generator 1 passes through outlet 4. It then enters connector 30 through inlet 31 and leaves through outlet 37 and insulated line 38. Any slag, carbon, metals, or refractory that may separate from the effluent gas stream in connector 30 accumulate in the bottom of slag pot 34. The material in slag pot 34 is periodically removed through line 39, valve 40 and line 41, or through a conventional lock-hopper system not shown.

The effluent stream of generator gas in line 38 is mixed in insulated line 42 with a temperature moderator to be further described. The resulting mixture of gas in line 42 is passed through expansion turbine 50 as the working fluid. Expansion turbine 50 provides the power for gas compression and optionally to drive an electric generator. Thus coupled to expansion turbine 50 by shafts 51, 52, and 53 are compressors 54, 55, and 56. An electric generator (not shown) may be driven by shaft 57. Although the shafts are shown in the Drawing in a straight line, they may be offset, joined by flexible couplings, or rearranged. Any suitable method may be used for utilizing the rotational power produced by expansion turbine 50.

The exhaust gas leaving expansion turbine 50 is cooled in a conventional recuperator, or gas cooler, or both. For example, the turbine exhaust gas in line 60 may be passed through recuperator 24 and line 61, and optionally through gas cooler 62, where water may be converted into steam. The gas stream then passes, by way of line 64, into gas cleaning zone 63 where substantially all of the particulate carbon and any remaining entrained solids are removed. The gas stream is scrubbed with water from line 65 to produce a carbon-water dispersion. This dispersion is resolved by the addition of a liquid hydrocarbon. A carbon-liquid hydrocarbon slurry is produced, which may be introduced into the gas generator as a portion of the feed. Thus, a liquid hydrocarbon may enter gas cleaning zone 63 through line 66, and the carbon-liquid hydrocarbon slurry may leave through line 67. Alternately, a carbon-water slurry may leave through line 67. The clean gas stream leaves through line 68. When it is desired to increase the hydrogen content of the product gas while simultaneously decreasing the amount of carbon monoxide, the process gas stream in line 68 can be introduced into a water-gas shift conversion zone, not shown in the Drawing.

The process gas stream in line 68, or the stream of $H_2$-rich gas leaving the water-gas shift conversion zone (not shown), is dewatered and optionally purified to remove any acid gases $CO_2$, $H_2S$, or COS. For example, the process gas stream in line 68 may be cooled below its dew point in cooler 69. The process gas stream then enters gas-liquid separator 75 by way of line 76 and water, i.e. condensate, is removed through line 77. The dewatered gas is removed through line 78, and with valve 79 closed and valve 80 open, the process gas stream is passed through lines 81 and 82 into acid-gas absorber 83.

Acid-gases may be removed in acid-gas absorber 83 by lean solvent absorbent, which is introduced through line 84 and which leaves saturated with acid-gas through line 85. The purified gas leaves by line 86. When there is no need for the acid-gas absorber, or when it desired to compress the process gas stream in compressors 54 and 55 before introduction into the gas purification zone, acid-gas absorber 83 may be by-passed by all or a portion of the process gas stream in line 78. In such a case, valve 79 is opened, valve 80 is closed, and the process gas stream is passed through lines 87, 88 and 89 into compressor 54.

The cooled, cleaned, dewatered, and optionally purified process gas stream passes through line 89 into compressor 54. Optionally, additional gas compression may be achieved by passing the process gas through line 90, cooler 91 and line 92 into compressor 55. Water may be removed from cooler 91 through line 93.

In the preferred embodiment, with valves 100 and 101 open, and valves 102, 103 and 104 closed, at least a portion of the compressed process gas stream is recycled to mixing zone 42, as previously described, by way of lines 105—108, 45, 44, and 43. The remainder of the compressed process gas stream leaves compressor 55 by way of line 109 as product gas and may be used as synthesis gas, $H_2$-rich gas, or fuel gas. The term "$H_2$ and CO-containing gas" as used herein means the product gas in line 109.

Optionally, solids-free water such as condensate from line 77, or steam i.e. saturated or superheated, may be introduced into the recycle gas stream in line 44 by way of line 110, valve 104 and line 111.

In an embodiment as previously mentioned, the compressed process gas stream may be purified after compression. In such case, with valves 80, 101, and 103 closed and valves 79, 100 and 102 opened, the compressed process gas stream is passed through lines 105, 106, 115, and 116 into acid-gas absorber 83. At least a portion of the purified gas stream leaving the absorber 83 is passed through lines 117, 45, 44, and 43 into line 42. Optionally, condensate or steam from line 110 may be mixed with the compressed purified gas in line 44. A portion of the compressed purified gas in line 117 may be discharged as product gas through line 118, valve 103, and line 119.

In another embodiment of the process, only solids-free water i.e. condensate in line 110 is used to moderate the temperature of the effluent stream of generator gas in line 38. In such a case, valve 100 is closed. The rest of the process is similar to the preferred embodiment including the alternative modifications described i.e. recuperator 24, water-gas shifting, and acid-gas absorber 83. Due to the heat absorbed upon evaporation, by injecting water, for example atomized water, into the hot generator gas, a high cooling effect per pound of coolant may be obtained.

In the process of the present invention, a continuous effluent gas stream of raw synthesis gas or fuel gas is produced in the refractory lined reaction zone of a separate free-flow unpacked noncatalytic partial oxidation fuel gas generator 1, which is preferably a vertical steel pressure vessel, e.g. as described in US—A—2,992,906.

A wide range of combustible carbon containing organic materials may be reacted, in the gas generator, with a free-oxygen containing gas, optionally in the presence of a temperature moderating gas.

The term "hydrocarbonaceous" is used herein to describe various suitable feedstocks for the partial oxidation gas generator including gaseous, liquid, and solid hydrocarbons, carbonaceous materials, and mixtures thereof. In fact, substantially any combustible carbon containing organic material, fossil fuel, or slurries thereof, may be included within the definition of the term "hydrocarbonaceous". For example, there are (1) pumpable slurries of solid carbonaceous fuels, such as coal, lignite, wood pulp, particulate carbon, petroleum coke, concentrated sewer sludge, and mixtures thereof in water or a liquid hydrocarbon; (2) gas-solid suspension such as finely ground solid carbonaceous fuels dispersed in either a temperature moderating gas or in a gaseous hydrocarbon; and (3) gas-liquid-solid dispersions, such as atomized liquid hydrocarbon fuel or water and particulate carbon dispersed in a temperature-moderating gas. The hydrocarbonaceous fuel may have a sulfur content of 0 to 10 wt. % and an ash content of 0 to 15 wt. % for liquid or gaseous fuels, and up to 50 wt. % with solid hydrocarbonaceous fuels.

The term liquid hydrocarbon, is used herein to include various materials, such as liquefied petroleum gas, petroleum distillates and residues, gasoline, naphtha, kerosine, crude petroleum, asphalt, gas oil, residual oil, tar-sand oil and shale oil, coal derived oil, aromatic hydrocarbon (such as benzene, toluene, xylene fractions), coal tar, cycle gas oil from fluid-catalytic-cracking operation, furfural extract of coker gas oil, and mixtures thereof. Gaseous hydrocarbon fuels, is used herein to include methane, ethane, propane, butane, pentane, natural gas, water-gas, coke-oven gas, refinery gas, acetylene tail gas, ethylene off-gas, synthesis gas, and mixtures thereof. Both gaseous and liquid feeds may be mixed and used simultaneously, and may include paraffinic, olefinic, naphthenic, and aromatic compounds in any proportion.

Also included within the definition of the term hydrocarbonaceous are oxygenated hydrocarbonaceous organic materials including carbohydrates, cellulosic materials, aldehydes, organic acids, alcohols, ketones, oxygenated fuel oil, waste liquids and by products from chemical processes containing oxygenated hydrocarbonaceous organic materials and mixtures thereof.

The hydrocarbonaceous feed may be at room temperature or it is preferably preheated to a temperature of 315 to 650°C (600°F to 1200°F) say 426°C (800°F), but preferably below its cracking temperature. Optionally, the hydrocarbonaceous feed may be preheated by indirect i.e. non-contact heat exchange in recuperator 24 with the exhaust gas from the expansion turbine 50 and the recycle process gas stream in line 44. The hydrocarbonaceous feed may be introduced into the burner through line 23 in liquid phase or in a vaporized mixture with a temperature moderator. Suitable temperature moderators include steam, water, $CO_2$-rich gas, nitrogen in air, by-product nitrogen from a conventional air separation unit, and mixtures of the aforesaid temperature moderators.

The use of a temperature moderator in the reaction zone of the gas generator depends in general on the carbon to hydrogen ratio of the feedstock and the oxygen content of the oxidant stream. A temperature moderator may not be required with some gaseous hydrocarbon fuels, but one is generally used with liquid hydrocarbon fuels and with substantially pure oxygen. The temperature moderator may be introduced in admixture with either or both reactant streams. Alternatively, the temperature moderator may be introduced into the reaction zone of the gas generator by way of a separate conduit in the fuel burner.

The weight ratio of total amount of $H_2O$ to fuel introduced into the reaction zone of the gas generator is in the range of 0 to 5.

When comparatively small amounts of $H_2O$ are charged to the reaction zone, for example through the burner to cool the burner tip, the $H_2O$ may be mixed with either the hydrocarbonaceous feedstock, the free-oxygen containing gas, the temperature moderator, or a combination thereof. In such case, the weight ratio of water to hydrocarbonaceous feed may be 0.0 to 1.0, and preferably 0.0 to less than 0.2.

The term free-oxygen containing gas, as used herein is intended to include air, oxygen-enriched air, i.e. greater than 21 mole % oxygen, and substantially pure oxygen, i.e. greater than 95 mole % oxygen (the remainder comprising $N_2$ and rare gases). The amount of nitrogen in the product gas may be decreased by employing substantially pure oxygen or oxygen-enriched air rather than air. Free-oxygen containing gas may be introduced into the burner at a temperature from ambient to 982°C (1800°F). The ratio of free oxygen in the oxidant to carbon in the feedstock (O/C, atom/atom) is preferably from 0.7 to 1.5.

The feedstreams are introduced into the reaction zone of the fuel gas generator 1 by means of a fuel burner, e.g. an annulus-type burner, as described in US—A—2,928,460.

The feedstreams are reacted by partial oxidation without a catalyst in the reaction zone of the free-flow gas generator 1 at an autogenous temperature of 980 to 1650°C (1800°F to 3000°F) such as 1090 to 1595°C (2000 to 2900°F), and at a pressure of 9.8 to 196 bars (10 to 200 atmospheres absolute), such as 39 to 98 bars (40 to 100 atm. abs). The reaction time in the fuel gas generator is generally 1 to 10 seconds. The effluent stream of gas leaving the gas generator comprises $H_2$, CO, $CO_2$, $H_2O$ and at least one member of the group $CH_4$, $H_2S$, COS, $N_2$, Ar and entrained solid materials. The composition (in mole %) may be as follows: $H_2$ 10.0 to 68.0, CO 15.0 to 60.0, $CO_2$ 3.0 to 30.0, $H_2O$ 2.0 to 50.0, $CH_4$ 0 to 28.0, $H_2S$ 0.0 to 5, COS 0.0 to 0.7, $N_2$ 0.0 to 60.0, and Ar 0.0 to 1.8. Unreacted particulate carbon (on the basis of carbon in the feed by weight) is usually present in the effluent gas stream in an amount of 0.2 to 20 wt. % with liquid feeds, but is usually negligible with gaseous hydrocarbon feeds. The specific composition of the effluent gas is dependent on actual operating conditions and feedstreams. Synthesis gas comprises mixtures of $H_2$ and CO. The $CH_4$ content may be maximized for fuel gas having a high heating value.

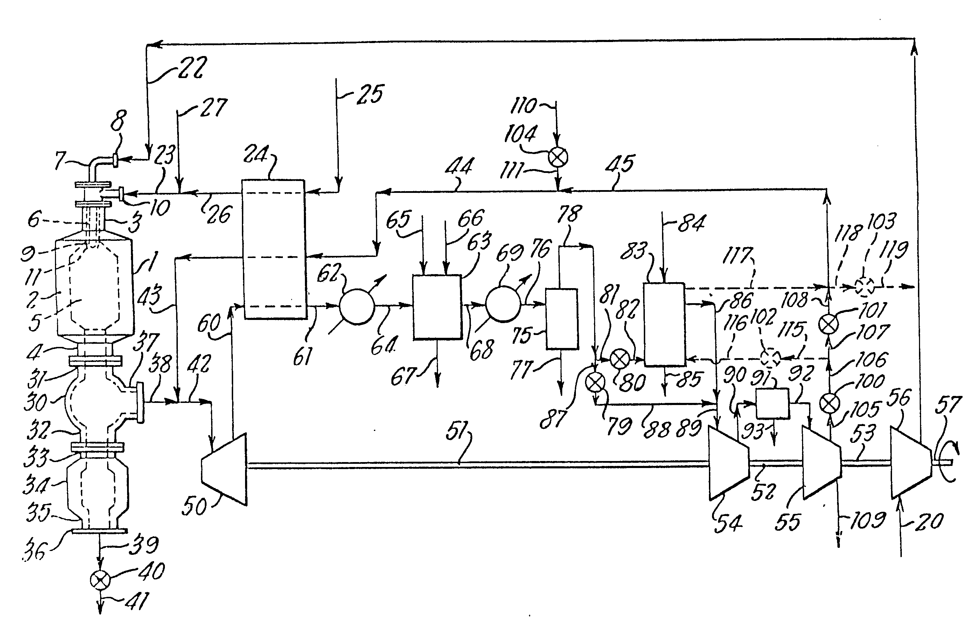

A continuous stream of hot effluent gas, at substantially the same temperature and pressure as in the reaction zone leaves from the axial exit port 4 of the gas generator 1 and is then introduced into a mixing zone. For hydrocarbonaceous fuels containing a high ash content such as coal, a solids separation zone is preferably inserted between the exit port of the gas generator and said mixing zone. The solids separation zone may comprise a catch-pot, slag chamber, cyclone separator, electrostatic precipitator, or combinations of such schemes for removing at least a portion of any solid matter. e.g. particulate carbon, ash, metal constituents, scale, slag, refractory, and mixtures thereof, that may be entrained in the hot effluent gas stream, or which may flow from the gas generator, e.g. slag, ash, or bits of refractory. The solid particles are separated from the effluent gas stream and recovered with very little, if any temperature or pressure drop in the process gas stream. A typical slag chamber that may be employed is shown in Fig. 1 of US—A—3,528,930. By removing all of the solid particles above the size of 12 microns by means of gravity or cyclone separation, or other physical cleaning process, erosion of the turbine and rotor blading may be minimized.

The mixing zone may comprise any conventional means for mixing substantially all of the hot generator effluent gas stream at a temperature of 980 to 1650°C (1800 to 3000°F) with a portion of cooled and cleaned recycle process gas stream at a temperature of 175 to 540°C (350 to 1000°F). The volumetric ratio of cooled and cleaned recycle process gas stream to the total gas mixture comprising effluent generator gas plus recycle gas is generally in the range e.g. 0.2 to 0.8, e.g. 0.4 to 0.6. The cooled and cleaned recycle process gas stream is produced downstream in the process and will be described further. Sufficient recycle process gas stream is mixed with the generator effluent gas stream to reduce the temperature to from 540 to 1315°C (1000 to 2400°F) such as 760 to 1205°C (1400 to 2200°F) or say 760 to 1040°C (1400 to 1900°F) and above the dew point. The pressure remains in the range from 9.8 to 196 bars (10 to 200 atm. abs.) such as 39 to 98 bars (40 to 100 atm. abs.), and preferably only negligibly less than that in the gas generator. Further, the concentrations of particulate carbon and any acid-gases in the process gas stream leaving the mixing zone may be reduced.

The aforesaid gas mixture is then passed as the working fluid through power-recovery turbine means 50, comprising at least one power developing expansion turbine. The expansion turbine is coupled to at least one gas compressor, and optionally to an electric generator.

The exhaust gas leaves the power-recovery turbine means at a temperature of 176 to 537°C (350 to 1000°F) and with a pressure of 1.96 to 14.7 bars (2 to 15 atm. abs.). For example, the ratio of the turbine inlet pressure to outlet pressure may be from 6:1 to 40:1. Advantageously, heat is subsequently recovered from the turbine exhaust gas by indirect heat exchange in a first heat exchange zone i.e. recuperator 24 with the recycle process gas stream on its way to the previously described mixing zone.

Next, the cooled turbine exhaust gas may be passed into a conventional gas cleaning zone 63 to remove any entrained particulate carbon and any other entrained solids. Since substantially no particulate carbon is produced with gaseous hydrocarbonaceous fuels, the gas scrubbing step may not be necessary with gaseous fuels such as natural gas or methane. Slurries of particulate carbon in a liquid hydrocarbon fuel may be produced in the gas cleaning zone, and may be recycled to the fuel gas generator as at least a portion of the feedstock. Any conventional procedure suitable for removing suspended solids from a gas stream may be used.

In one embodiment of the invention, the expanded process gas stream after cooling in a recuperator is introduced into a gas-liquid scrubbing zone where it is scrubbed with a scrubbing fluid such as liquid hydrocarbon or water in order to remove entrained particulate carbon. A suitable liquid-gas tray-type column is more fully described in US—A—3,816,382. Thus, by passing the process gas stream up a scrubbing column in direct contact and countercurrent flow with a suitable scrubbing fluid, or with dilute mixtures of particulate carbon and scrubbing fluid, flowing down the column, the particulate carbon may be removed. A slurry of particulate carbon and scrubbing fluid is removed from the bottom of the column and sent to a carbon separation or concentration zone. This may be done by any conventional means that may be suitable e.g. filtration, centrifuge, gravity settling, or by liquid hydrocarbon extraction, such as the process described in US—A—2,992,906. Clean scrubbing fluid or dilute mixtures of scrubbing fluid and particulate carbon are recycled to the top of the column for scrubbing more synthesis gas.

Other suitable conventional gas cooling and cleaning procedures may be used in combination with or in place of the aforesaid column. For example, the process gas stream may be introduced below the surface of a pool of quenching and scrubbing fluid by means of a dip-tube unit, or the process gas stream may be passed through a plurality of scrubbing steps including an orifice-type scrubber or venturi nozzle scrubber such as shown in US—A—3,618,296.

Optionally, if it is desired to increase the hydrogen content of the product gas while simultaneously decreasing the amount of carbon monoxide present, then the soot-free gas stream may be introduced into a conventional catalytic water-gas shift reaction zone at an inlet temperature of 176 to 371°C (350 to 700°F). CO and $H_2O$ are reacted over a conventional water-gas-shift catalyst to produce additional $H_2$ and $CO_2$. A suitable water-gas-shift catalyst may comprise iron oxide mixed with Cr oxide and promoted by 1 to 15 wt. % of an oxide of another metal, such as K, Th, U, Be, or Sb. Reaction occurs at 260 to 565°C (500 to 1050°F). Alternatively, cobalt molybdate or alumina may be used as the water-gas shift catalyst at a reaction temperature of 260 to 482°C (500 to 900°F). Co-Mo catalysts comprise (in weight percent) CoO 2—5, $MoO_3$ 8—16, MgO nil—20, and $Al_2O_3$ 59—85. Another shift catalyst comprises a mixture of copper and zinc salts or oxides in a weight ratio of about 3 parts of zinc to 1 part of copper. Next, substantially all of the $H_2O$ may be removed from the gas stream.

The process gas stream in dewatered by, for example, cooling below its dew point and then separating out the condensed water. The clean dry process gas stream is then compressed. After the gas stream is compressed to a pressure slightly above that in the gas generator, a portion of the water which was previously condensed out may be optionally reintroduced into the recycle process gas stream at a point in the line located before the recuperator. The condensate may be used to moderate the temperature of the generator effluent gas in the mixing zone by direct addition to the recycle gas, alone or in combination with other moderating streams, such as saturated or superheated steam. This would tend to yield several advantages: (1) the water would vaporize at partial pressures rather than at the total pressure, allowing use of lower grade heat; and regeneration against the turbine exhaust will be more efficient; (2) the number of heat exchangers can be reduced from that required for separate streams; and (3) the *in situ* generation of steam in the recycled gas will tend to suppress undesired back reactions, such as methanation.

Depending on the desired pressure of the recycle gas stream and the product gas stream, one or more conventional gas compressors (54, 55) may be operated from power produced by the expansion turbine 50. The pressure of the product gas may be less than equal to, or greater than the pressure in the gas generator. The product gas and the recycle gas stream may be removed from the same gas compressor or from separate compressors. The recycle gas stream is produced at a pressure slightly greater than the pressure in the gas generator. The gas stream may be cooled between compressors. Multi-stage turbines and compressors may be employed. Optionally the free-oxygen containing gas introduced into the gas generator may be first compressed to a pressure above that in the gas generator by a separate gas compressor 56 powered by or coupled to said expansion turbine. Optionally, an electric generator (not shown in the Drawing) may also be powered by said expansion turbine.

In another embodiment of the invention the fuel to the partial oxidation gas generator contains sulfur compounds, which appear in the effluent gas stream from the generator as $H_2S$ and COS. In such a case, the concentration of $H_2S$ and COS in the gas in the power loop is reduced below the level of chemical attack on the turbine and gas compressors. The cooled and cleaned exhaust turbine gas stream may be purified by removing acid-gases i.e. $H_2S$, COS, and $CO_2$ in an acid-gas absorption zone 83. Advantageously, this will permit reduction of the size and cost of the gas compressors, and reduce or eliminate chemical attack on them. It will also upgrade the composition of the product gas stream, and prevent environmental pollution if the product gas is used as a fuel gas. It will also prevent sulfur contamination of any downstream catalyst that the product gas may come in contact with. Further, the purified recycle gas stream will dilute the effluent generator gas and thereby reduce or eliminate any chemical attack of the expansion turbine. Alternatively, where it is more economic to remove $H_2S$ and possibly $CO_2$ at high pressure, the acid-gas absorption zone may be placed after said turbine powered gas compressors.

The gaseous impurities e.g. $H_2S$, COS or $CO_2$ may be removed by any suitable conventional process for example, refrigeration and physical or chemical absorption with solvents, such as methanol, N-methylpyrrolidone, triethanolamine or propylene carbonate, or alternately with hot potassium carbonate.

In solvent absorption processes, most of the $CO_2$ absorbed in the solvent may be released by simple flashing. The rest may be removed by stripping. This may be done most economically with nitrogen. Nitrogen may be available as a low cost by-product when a conventional air separation unit is used for producing substantially pure oxygen (95 mole percent $O_2$ or more) for use as the free-oxygen containing gas used in the gas generator. The regenerated solvent is then recycled to the absorption column for reuse. When necessary, final cleanup may be accomplished by passing the process gas through iron oxide, zinc oxide, or activated carbon to remove residual traces of $H_2S$ or organic sulfide.

Similarly, the $H_2S$ and COS containing solvent may be regenerated by flashing and stripping with nitrogen, or alternatively by heating and refluxing at reduced pressure without using an inert gas. The $H_2S$ and COS are then converted into sulfur by a suitable process. For example, the Claus process may be used for producing elemental sulfur from $H_2S$ as described in Kirk-Othmer Encyclopedia of Chemical Technology, Second Edition Volume 19, John Wiley, 1969, Page 353. Excess $SO_2$ may be removed and discarded in chemical combination with limestone, or by means of a suitable commercial extraction process.

A stream of dry, clean, and purified process gas leaves from the gas purification zone at a temperature of 37 to 427°C (100° to 800°F) and at a pressure of 9.8 to 176.4 bars (10 to 180 atm. abs.) and preferably 14.7 to 58.8 bars (15 to 60 atm. abs.) and having for example the following composition in mole %: $H_2$ 15 to 98, CO 1 to 75, $CH_4$ 0 to 30, $N_2$ 0.0 to 70 and Ar 0.0 to 2.0.

The process gas stream from the acid-gas absorption zone may be compressed to a pressure at least slightly above that in the gas generator. As previously described, a portion of the process gas stream is recycled to the mixing zone as said recycle gas stream. The remainder of the dry, clean, purified, compressed process gas stream is removed from the compression zone as product gas i.e. synthesis gas, or fuel gas.

In another embodiment of the process, the hot effluent gas stream from the gas generator is cooled solely by introducing solids-free water in liquid phase into the process gas stream. There is no recycle of a portion of the process gas stream for use as the temperature moderator. Should the effluent generator gas stream contain entrained solids such as ash, refractory, or particulate carbon, then a portion of the entrained solids are removed in the previously described free-flow gravity or cyclone separation zone before the cooling water is introduced. The temperature and amount of water that is introduced into the hot effluent generator gas as the temperature moderator is sufficient to cool the process gas stream from a temperature of 980 to 1650°C (1800° to 3000°F) to a temperature of 537 to 1315°C (1000° to 2400°F), and above the dew point. The solids-free water, in liquid phase, may be introduced in an atomized state. Boiler feed water or condensate produced elsewhere in the process may be employed. Optionally, the water may be preheated by indirect heat exchange with the turbine exhaust gas before being introduced into the hot effluent generator gas stream. The temperature-moderated process gas stream is then introduced into the power developing expansion turbine as the working fluid at an inlet pressure of 9.8 to 196 bars (10 to 200 atm. abs.). After expansion, in the turbine the exhaust gas leaves the turbine at a temperature of 176 to 537°C (350° to 1000°F) and a pressure of 1.96 to 14.7 bars (2 to 15 atm. abs.). Advantageously, heat may be recovered from the turbine exhaust gas by indirect heat exchange in recuperator 24 with the hydrocarbonaceous fuel feed, and/or as previously described by preheating the water used for moderating the temperature of the effluent generator gas. Steam may, optionally be produced by cooling the process gas stream in a gas cooler 62. Next, the cooled turbine exhaust gas may be cleaned, if necessary, in a conventional gas cleaning zone 63 to remove any remaining entrained solids i.e. particulate carbon. Slurries of particulate carbon in a liquid hydrocarbon fuel or water may be produced in the gas cleaning zone, and may be recycled to the fuel gas generator as at least a portion of the feedstock. Suitable gas cooling and cleaning procedures have been previously described.

Depending on the desired concentration of hydrogen in the product gas, the process gas stream may be optionally introduced next into a conventional catalytic water-gas shift conversion zone, in a manner as described previously. Similarly, the process gas stream may be next optionally introduced into a conventional gas purification zone, for removing for example acid-gases in a manner as previously described. Further, the gas purification zone may be located before or after the next step, which involves compressing the process gas stream to a desired pressure which may be less than, equal to, or greater than the pressure in the gas generator. The process gas stream is compressed by means of at least one compressor powered by said expansion turbine. Optionally, a turbo-electric generator may be also driven by said expansion turbine.

The amount of useful power obtained by the subject process is greater than that obtained for a closed Brayton cycle. The entire heat input in the closed Brayton cycle is obtained by expensive and inefficient indirect gas-to-gas heat exchange in contrast with the process of the present invention which utilizes the inherent heat content of the process fluid.

The process of the present invention has the following advantages:

(1) A worthwhile increase in power production over the closed Brayton-cycle is realized; and an expensive high temperature high pressure gas-to-gas heat exchanger may be eliminated.

(2) In comparison with some other power systems, the large entropy gain associated with the large temperature difference between the gas generator and the turbine inlet may be avoided.

(3) The working fluid for the power cycle is produced by the process and has about the same composition as the product gas. This eliminates the cost, inventory, make-up, contamination and storage of a separate working fluid.

(4) By eliminating a separate working fluid, there is a reduction in the necessary amount of heat transfer between streams and in the thermo-dynamic losses thereby occasioned.

(5) Acid-gas, when present in the process gas stream, may be removed. The lives of the turbines and the compressors in the system are thereby increased; the product gas is suitable for downstream catalytic reactions, and environmental pollution is avoided.

(6) Power is obtained from the large molal increase that is associated with the partial oxidation of hydrocarbonaceous fuels, in addition to the power obtained from the elevated pressure and sensible heat in the hot raw partial oxidation product gas.

Example

The following example illustrates an embodiment of the process of this invention which should not be construed as limiting the scope of the invention. The process is continuous and the quantities specified are on an hourly basis for all streams of materials.

The embodiment of the invention represented by the Example is depicted in the Drawing as previously described. Raw gas is continuously produced in gas generator 1 by partial oxidation of a hydrocarbonaceous fuel with oxygen (about 98.0 volume percent purity). A summary of the temperature, pressure and quantity for the various streams in the Drawing is shown in Table I below.

The effluent gas stream leaves the generator at a temperature of 1430°C (2605°F) and a pressure of 83.2 bars (1215 psia). The composition of the gas stream in line 38 of the Drawing follows, in gram-moles per 100 gram of vacuum residuum feed oil: $H_2$ 5.612, $H_2O$ 1.365, $CH_4$ 0.061, CO 6.380, $CO_2$ 0.623, $N_2$ 0.018, Ar 0.065, $H_2S$ 0.136, and COS 0.008.

Cooled and cleaned recycle gas from line 43 is mixed with the effluent gas stream from line 38 to produce the feed gas mixture in line 42 going to expansion turbine 50. The exhaust gas from the turbine in line 60 is cooled in recuperator 24 and leaves by line 61. The process gas stream is scrubbed with water to remove any entrained particulate carbon and further cooled below the dew point to condense out water. The process gas stream is then purified in section 83 to remove $H_2S$ and COS. $CO_2$ is removed concomitantly. Section 83 may be any of the well-known acid-gas scrubbing processes commonly employed with synthesis gas generation. The process gas stream in line 86 is then compressed in compressors, 54 and 55, and any additional water may be removed between compressors. After compression the process gas stream in line 45 is mixed with condensate from line 110 to produce the mixture in line 44. This gas mixture is heated in recuperator 24 to produce the cooled (in comparison with the feed gas stream in line 42) and cleaned recycle gas mixture in line 44.

TABLE I

| Line No. | Pressure bars | (psia) | Temperature, °C | (°F) | Amount, g moles/ 100 g feed oil |
|---|---|---|---|---|---|
| 43 | 83.6 | (1220) | 304 | (580) | 10.150 |
| 38 | 83.2 | (1215) | 1429 | (2605) | 14.268 |
| 42 | 83.2 | (1215) | 982 | (1800) | 24.418 |
| 60 | 5.2 | (76) | 364 | (687) | 24.418 |
| 61 | 4.2 | (61) | 149 | (300) | 24.418 |
| 82 | 3.15 | (46) | 38 | (100) | 21.673 |
| 86 | 4.8 | (70) | 38 | (100) | 20.906 |
| 105 | 89.0 | (1300) | 258 | (497) | 7.816 |
| 111 | 84.9 | (1240) | 38 | (100) | 2.334 |
| 44 | 84.6 | (1235) | 136 | (276) | 10.150 |
| 109 | 109.6 | (1600) | 294 | (561) | 13.090 |

In the above example expansion turbine 50 generates 1350.9 watts for each Kg/hr. (83.3 horse power for each 100 pounds per hour) of feed oil introduced through line 25. This leaves a net power generation of 428 watts for each Kg/hr. (26.4 horse power per 100 lbs/hr.) of feed oil after supplying the power required by compressors 54 and 55. Since oxygen is supplied at system pressure, compressor 56 is omitted. Further, the synthesis gas product in line 109 has been raised to a process pressure of 109.6 bars (1600 psia). In comparison, synthesis gas would be delivered at only 80.1 bars (1170 psia) had there been employed a more conventional sequence consisting of gas generation at 83.2 bars (1215 psia) cooling, carbon scrubbing, and acid gas removal.

**Claims**

1. A process for the production of a gaseous mixture comprising $H_2$ and CO and simultaneously generating power by partially oxidizing a hydrocarbonaceous fuel with a free-oxygen-containing gas, in the optional presence of a temperature moderator, at an autogenous temperature of from 980 to 1650°C (1800 to 3000°F) and a pressure from 9.8 to 196 bars (10 to 200 atmospheres absolute) to form a raw gas stream comprising $H_2$, CO, $CO_2$ and $H_2O$ and containing entrained particulate solids, separating at least a portion of said entrained particulate solids, and cooling, cleaning and compressing the gas stream, characterised in that the raw gas stream is cooled by mixing it with liquid water or with recycled purified gaseous mixture, and is expanded through an expansion turbine from an initial temperature of 537 to 1315°C (1000 to 2400°F) and above the dew point, and an initial pressure from 9.8 to 196 bars (10 to 200 atmospheres), to a final temperature of 176 to 537°C (350 to 1000°F) and a final pressure of 1.96 to 14.7 bars (2 to 15 atmospheres absolute), after removal of said entrained particulate solids and before, cleaning and compression.

2. A process as claimed in claim 1 characterised in that the raw gas stream is cooled by mixing it with recycled purified gaseous mixture in a volume ratio of recycled gas stream to total gas expanded through the turbine of from 0.2:1 to 0.8:1.

3. A process as claimed in claim 1 characterised in that the raw gas stream is cooled by mixing it with liquid water, said liquid water being preheated by indirect heat exchange with the gas stream leaving the expansion turbine.

4. A process as claimed in claim 2 characterised in that water or steam is added to the recycled purified gaseous mixture before it is mixed with the raw gas stream.

5. A process as claimed in any preceding claim characterised in that the gases leaving the expansion turbine are subsequently purified.

6. A process as claimed in any preceding claim characterised in that the gases leaving the expansion turbine are subjected to catalytic water-gas shift reaction.

7. A process as claimed in any preceding claim characterised in that the expansion turbine is used to power compressors used to compress product gas and/or recycled gases.

8. A process as claimed in any preceding claim characterised in that electrical energy is produced by coupling an electric generator to the expansion turbine.

**Revendications**

1. Procédé de fabrication d'un mélange gazeux comprenant $H_2$ et CO et simultanément de production d'énergie en oxydant partiellement un combustible hydrocarboné avec un gaz contenant de l'oxygène libre, facultativement en présence d'un modérateur de température, à une température autogène de 980 à 1650°C et à une pression de 9,8 à 196 bars pour former un courant de gaz brut comprenant $H_2$, CO, $CO_2$ et $H_2O$ et contenant des solides en particules entraînés, en séparant au moins une partie des solides en particules entraînés et en refroidissant, en purifiant et en comprimant le courant gazeux, caractérisé par le fait que l'on refroidit le courant de gaz brut en le mélangeant à de l'eau liquide ou à du mélange gazeux purifié recyclé et qu'on le détend à travers une turbine de détente, d'une température initiale de 537 à 1315°C et supérieure au point de rosée et d'une pression initiale de 9,8 à 196 bars à une température finale de 176 à 537°C et à une pression finale de 1,96 à 14,7 bars, après avoir éliminé les solides en particules entraînés et avant la purification et la compression.

2. Procédé selon la revendication 1, caractérisé par le fait que l'on refroidit le courant de gaz brut en le mélangeant à du mélange gazeux purifié recyclé, le rapport de volume entre courant de gaz recyclé et gaz total détendu à travers la turbine étant compris entre 0,2:1 et 0,8:1.

3. Procédé selon la revendication 1, caractérisé en ce que l'on refroidit le courant de gaz brut en le mélangeant à de l'eau liquide, cette eau liquide étant préchauffée par échange de chaleur indirect avec le courant de gaz quittant la turbine de détente.

4. Procédé selon la revendication 2, caractérisé en ce que l'on ajoute de l'eau ou de la vapeur au mélange gazeux purifié recyclé avant de le mélanger au courant de gaz brut.

5. Procédé selon l'une quelconque des revendications précédentes, caractérisé par le fait que l'on purifie ensuite les gaz quittant la turbine de détente.

6. Procédé selon l'une quelconque des revendications précédentes, caractérisé par le fait que l'on soumet les gaz quittant la turbine de détente à une réaction de transformation de gaz à l'eau.

7. Procédé selon l'une quelconque des revendications précédentes, caractérisé par le fait que l'on utilise la turbine de détente pour actionner des compresseurs servant à comprimer le gaz obtenu comme produit et/ou les gaz recyclés.

8. Procédé selon l'une quelconque des revendications précédentes, caractérisé par le fait que l'on produit de l'énergie électrique en accouplant un générateur électrique à la turbine de détente.

**Patentansprüche**

1. Verfahren zur Herstellung eines Gasgemisches, das $H_2$ und CO enthält oder daraus besteht, und zur gleichzeitigen Gewinnung von Energie durch Partialoxidation eines kohlenwasserstoffhaltigen Brennstoffes mit einem freien Sauerstoff enthaltenden Gas, gegebenenfalls in Anwesenheit eines Temperaturmoderators, bei einer autogenen Temperatur von 980 bis 1650°C (1800 bis 3000°F) und einem Druck von 9,8 bis 196 bar (10 bis 200 ata) unter Bildung eines Rohgasstromes, der $H_2$, CO, $CO_2$ und $H_2O$ enthält oder daraus besteht sowie Feststoffteilchen mit sich führt, Abtrennung mindestens eines Teils der mitgeführten Feststoffteilchen, Abkühlung, Reinigung und Komprimierung des Gasstromes, dadurch gekennzeichnet, daß der Rohgasstrom durch Vermischen mit flüssigem Wasser oder mit rückgeführtem gereinigten Gasgemisch gekühlt und nach Entfernung der mitgeführten Feststoffteilchen und vor der Reinigung und Komprimierung durch eine Expansionsturbine entspannt wird von einer Anfangstemperatur von 537 bis 1315°C (1000 bis 2400°F) und über dem Taupunkt und einem Anfangsdruck von 9,8 bis 196 bar (10 bis 200 at) auf eine Endtemperatur von 176 bis 537°C (350 bis 1000°F) und einem Enddruck von 1,96 bis 14,7 bar (2 bis 15 ata).

2. Verfahren nach Anspruch 1, dadurch gekennzeichnet, daß der Rohgasstrom durch Vermischen mit rückgeführtem gereinigtem Gasgemisch in einem Volumenverhältnis von rückgeführtem Gasgemisch zu Gesamtgas, entspannt durch die Turbine, von 0,2:1 bis 0,8:1 gekühlt wird.

3. Verfahren nach Anspruch 1, dadurch gekennzeichnet, daß der Rohgasstrom durch Vermischen mit flüssigem Wasser gekühlt wird, das durch indirekten Wärmeaustausch mit dem die Expansionsturbine verlassenden Gasstrom vorerhitzt wurde.

4. Verfahren nach Anspruch 2, dadurch gekennzeichnet, daß Wasser oder Dampf zu dem rückgeführten gereinigten Gasgemisch hinzugegeben wird, bevor dieses mit mit dem Rohgasstrom vermischt wird.

5. Verfahren nach einem der vorhergehenden Ansprüche, dadurch gekennzeichnet, daß die die Expansionsturbine verlassenden Gase anschließend gereinigt werden.

6. Verfahren nach einem der vorhergehenden Ansprüche, dadurch gekennzeichnet, daß die die Expansionsturbine verlassenden Gase einer katalytischen Wasser/Gas-Konvertierungsreaktion unterworfen werden.

7. Verfahren nach einem der vorhergehenden Ansprüche, dadurch gekennzeichnet, daß die Expansionsturbine zum Antreiben von Kompressoren eingesetzt wird, welche zur Komprimierung von Produktgas und/oder rückgeführten Gasen dienen.

8. Verfahren nach einem der vorhergehenden Ansprüche, dadurch gekennzeichnet, daß elektrische Energie durch Anschließen eines elektrischen Generators an die Expansionsturbine gewonnen wird.